# EUROPEAN PATENT APPLICATION

(11) **EP 2 395 682 A1**
(43) Date of publication of application: **14.12.2011**
(21) Application number: 09840661.4
(22) Date of filing: 11.12.2009
(51) Int. Cl.: H04B 10/00

(54) **A SERVICE ADAPTATION METHOD AND SERVICE ADAPTATION DEVICE**

(30) Priority: 25.02.2009 CN 200910006855
(71) Applicant: Huawei Technologies Co., Ltd., Shenzhen, Guangdong 518129 (CN)
(72) Inventor: ZHOU, Jianlin, Guangdong 518129 (CN); ZOU, Shimin, Guangdong 518129 (CN); HU, Xing, Guangdong 518129 (CN); CAO, Yang, Guangdong 518129 (CN)
(74) Representative: Körber, Martin Hans
(86) International application number: PCT/CN2009/075499
(87) International publication number: WO 2010/096993

(57) **Abstract**

A service adaptation device includes: a service access unit, configured to obtain service data, where the service data includes a Gigabit-Passive Optical Network (GPON) Encapsulation Method (GEM) frame, Time Division Multiplex (TDM) service data, and Ethernet (ETH) service data; and an Enhanced GPON Encapsulation Method (E-GEM) adaptation unit, configured to encapsulate the service data obtained by the service access unit into an E-GEM frame. A service adaptation method includes: obtaining service data, where the service data includes a GEM frame, TDM service data, and ETH service data; and encapsulating the obtained service data into an E-GEM frame.

## Description

This application claims priority to Chinese Patent Application No. 200910006855.4, filed with the Chinese Patent Office on February 25, 2009 and entitled "METHOD AND DEVICE FOR SERVICE ADAPTATION", which is incorporated herein by reference in its entirety.

### FIELD OF THE INVENTION

The present invention relates to the field of communications technologies, and in particular, to a method and a device for service adaptation.

### BACKGROUND OF THE INVENTION

With the development of network communication technologies, an existing network can bear a variety of services such as voice, video, online game, and web browsing. Currently, there are many technologies for implementing multi-service bearer in Metropolitan Area Networks (MANs), including: technologies based on a Synchronous Digital Hierarchy (SDH) system and an Ethernet (ETH) technology.

When equipment in an SDH system is used to bear a data service such as ETH, since the rate of the data service such as ETH does not match a payload of the SDH system (for example, the rate of the ETH service includes 10 Mbit/s, 100 Mbit/s, and 1000 Mbit/s; the payload of the SDH system includes 2 Mbit/s, 34 Mbit/s, and 140 Mbit/s), bandwidth utilization in the SDH system is low. In order to solve this problem, multiple Virtual Containers (VCs) are concatenated in the SDH system to form a Virtual Concatenation Group (VCG), so as to implement broadband service transmission. However, the technology is complex in implementation, and cannot implement dynamic bandwidth adjustment.

Owing to advantages of open standards, high performance, and low cost, the ETH technology is rapidly developed in implementation of the multi-service bearer. However, the ETH technology has a problem of large service delay variation due to the inherent storing and forwarding mechanism, so that the Quality of Service (QoS) cannot be ensured. A Time Division Multiplex (TDM) service is implemented through a Circuit Emulation Service (CES) technology. However, as the ETH system does not support transparent transmission of clock performance, the quality of clock transmission cannot be ensured, so that accessing to a clock-sensitive service is difficult to be supported.

In the process of researching and practicing the prior art, the inventors of the present invention find that the prior art for implementing multi-service bearer has the following disadvantages: the implementation technology is complex, the function of dynamic bandwidth adjustment is not supported, and the QoS performance is low. Furthermore, in recent years, a Gigabit-Passive Optical Network (GPON) has been selected in many large projects of telecom operators as a solution for large bandwidth fiber access in the future, and higher requirements are imposed on MAN equipment, so as to support the development of fiber access (access in many forms, for example, Fiber To The Building/Cabinet/Curb/Home, FTTx) in the future, which has not been realized in the prior art.

### SUMMARY OF THE INVENTION

Embodiments of the present invention provide a method and a device for service adaptation, so that comparatively simple technologies of multi-service access and bearer are implemented and QoS requirements may be ensured.

An embodiment of the present invention provides a device for service adaptation, including:
a service access unit, configured to obtain service data, where the service data includes a GPON Encapsulation Method (GEM) frame, TDM service data, SDH service data/Synchronous Optical Networking (SONET) service data/Asynchronous Transfer Mode (ATM) service data, and ETH service data; and
an Enhanced GPON Encapsulation Method (E-GEM) adaptation unit, configured to encapsulate the service data obtained by the service access unit into E-GEM frames in a unified form, where the E-GEM frame at least includes a destination identifier and a Payload Length Identifier (PLI) of a service.

An embodiment of the present invention further provides a method for service adaptation, including:
obtaining service data, where the service data includes a GEM frame, TDM service data, SDH service data/SONET service data/ATM service data, and ETH service data; and
encapsulating the obtained service data into E-GEM frames in a unified form.

With the device for service adaptation according to this embodiment of the present invention, by mapping different types of services at a service adaptation layer to E-GEM frames in a unified form, the adaptation of multiple types of services in a unified form may be implemented simply and conveniently, which is convenient for a network upper layer to perform unified management and transmission on various service data.

### BRIEF DESCRIPTION OF THE DRAWINGS

To illustrate the technical solutions in the embodiments of the present invention or in the prior art more clearly, the accompanying drawings required for describing the embodiments or the prior art are introduced briefly in the following. Obviously, the accompanying drawings in the following description are merely some embodiments of the present invention. According to these accompanying drawings, persons of ordinary skill in the art may also obtain other accompanying drawings without making creative efforts.
FIG. 1 is a simplified diagram showing an architecture of a multi-service transmission network;
FIG. 2 is a simplified diagram of a technical architecture corresponding to FIG. 1;
FIG 3 is a simplified diagram showing a logical structure of a service adaptation device according to a first embodiment of the present invention;
FIG. 4 is a diagram showing a format of an E-GEM frame formed in the service adaptation device according to the first embodiment;
FIG. 5 is a diagram showing a format of a Transmission Container (T-CONT) frame of a path layer formed in the service adaptation device according to the first embodiment;
FIG 6 is a simplified diagram showing a logical structure of a service adaptation device according to a second embodiment of the present invention;
FIG. 7 is a schematic diagram of mapping a GEM frame of a GPON system to an E-GEM frame according to the second embodiment of the present invention;
FIG. 8 is a diagram showing a structure of an improved T-CONT frame formed by an E-GEM frame according to an embodiment of the present invention;
FIG. 9 is a simplified diagram showing a logical structure of a service adaptation device according to a third embodiment of the present invention;
FIG. 10 is a schematic diagram of mapping a TDM service to an E-GEM frame according to the third embodiment of the present invention;
FIG. 11 is a simplified diagram showing a logical structure of a service adaptation device according to a fifth embodiment of the present invention;
FIG. 12 is a schematic diagram of mapping ETH service data to an E-GEM frame according to the third embodiment of the present invention;
FIG. 13 is a simplified diagram showing a logical structure of a multi-service adaptation device according to a seventh embodiment of the present invention;
FIG. 14 is a simplified flow chart of a service adaptation method according to an eighth embodiment of the present invention;
FIG. 14a is a simplified flow chart of a service adaptation method in a GPON system according to the eighth embodiment of the present invention;
FIG. 14b is a simplified flow chart of a service adaptation method for TDM service data according to the eighth embodiment of the present invention; and
FIG. 14c is a simplified flow chart of a service adaptation method for an ETH service according to the eighth embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments in the following descriptions are merely a part of the embodiments of the present invention, rather than all the embodiments of the present invention. Based on the embodiments of the present invention, other embodiments derived by persons of ordinary skill in the art without making creative efforts all fall within the protection scope of the present invention.

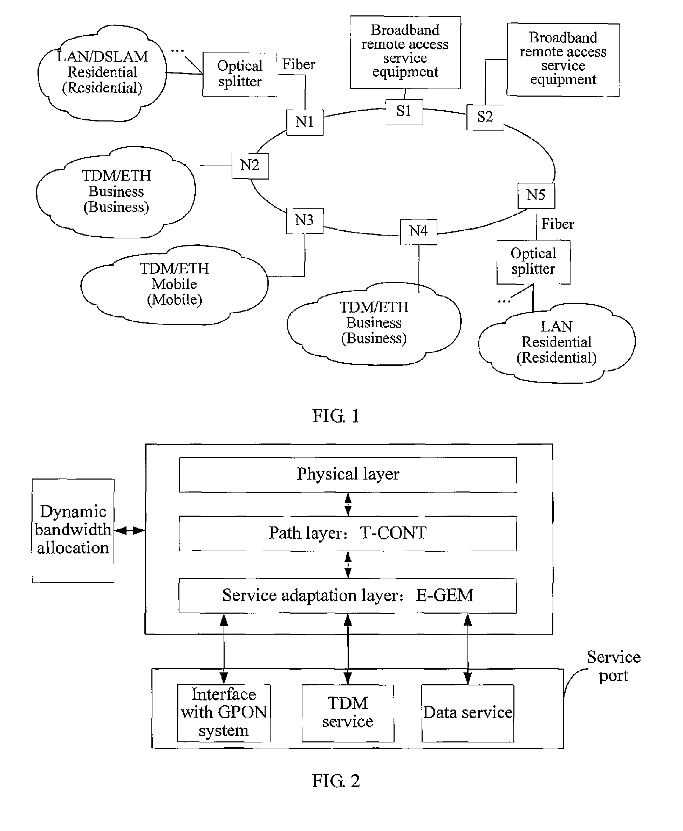

To facilitate the understanding of the embodiments of the present invention, firstly, application scenarios of the embodiments of the present invention are necessarily illustrated. Referring to FIG. 1, a multi-service transmission network is shown, and two types of network nodes, that is, S nodes and N nodes, exist on the ring. The N nodes are common service access points, and the S nodes not only have the functions of the N nodes, but also are interconnection nodes of an upper layer network and the network of the ring structure. A service adaptation device provided in this embodiment of the present invention is included in the N nodes and the S nodes, so that the network can bear multiple types of services. The multiple types of services borne by the network may be further divided into the following three types:
the first are Fixed Bandwidth (FB) type services, mainly used to bear services with strictly ensured bandwidth and delay, for example, TDM services, SDH services/SONET services/ATM services, or dedicated line services, where SDH service data, SONET service data, and ATM service data have the same features as those of the TDM services, and all of them are services with fixed rate and continuous code streams, so that the processing of this type of services is similar to that of the TDM services; and for the convenience of description, in this embodiments of the present invention, the SDH service data, the SONET service data, and the ATM service data are also processed as the TDM service data;
the second are Assured Bandwidth (AB) type services, for example, on-demand services or dedicated line services; and
the third are Best Effort (BE) type services, for example, common Internet access services such as web browsing.

For the AB and BE types of services, the network is equivalent to an aggregation network, where aggregation nodes are S nodes; and for the FB type services, the network is equivalent to a peer switching network, and may access or drop the TDM services, the SDH/SONET/ATM services, or the dedicated line services from any node.

As an example, in FIG. 1, an access layer Passive Optical Network (PON) that may specifically be a network of a GPON system is interconnected with nodes N1 and N5, and terminal equipment Optical Network Unit (ONU) transmits multiple types of service data such as service data of a Local Area Network (LAN) or Digital Subscriber Line Access Multiplexer (DSLAM) to nodes N1 and N5 through an Optical Distribution Network (ODN); data services such as direct adding and dropping TDM services and ETH are interconnected with nodes N2, N3, and N4, and S1 and S2 are backup for each other, for interconnecting an upper layer service network. Each node may support multi-service transmission, and ensure the QoS requirements of the services.

FIG. 2 shows a corresponding technical architecture, which includes a service adaptation layer, a path layer, and a physical layer (PHY). The service adaptation layer encapsulates received different types of services into E-GEM frames in a unified form, and the E-GEM frame includes a unique identifier of each service in the network. As shown in FIG. 2, services transmitted from service sides to nodes may mainly include three types:
the first are services transmitted to the nodes through a GPON interface, and these services are encapsulated in a GEM frame, where the GEM frame of GPON is considered as one of customer signals, being convenient for smooth interconnection with GPON without dropping the services;
the second are TDM services directly transmitted to the nodes; and
the third are ETH data services directly transmitted to the nodes.

At the service adaptation layer, nodes encapsulate different types of data services sent from a lower layer network to E-GEM frames in a unified form; and perform decapsulation processing of E-GEM frames on data frames sent from an upper layer network.

At the path layer, according to factors such as service type, destination address, and priority, multiple E-GEM frames are encapsulated into different types of T-CONTs.

At the PHY, all T-CONT frames are encapsulated into physical layer data frames, and then the physical layer data frames are sent to the upper layer network.

The preceding is the description of multi-service transmission in an adding direction, and the multi-service transmission in a dropping direction is opposite to the procedure described in the preceding, and is not repeated here. A service adaptation device provided in an embodiment of the present invention is illustrated in the following with reference to specific embodiments.

### Embodiment 1

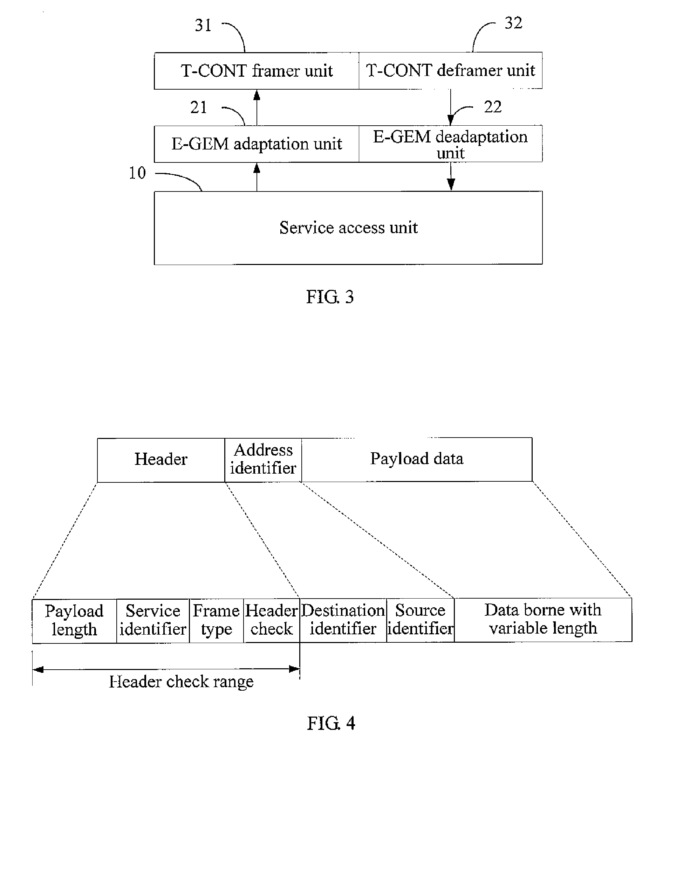

A service adaptation device provided in the embodiment of the present invention, as shown in FIG. 3, includes a service access unit 10 and an E-GEM adaptation unit 21. The service access unit 10 has a level-1 Dynamic Bandwidth Allocation (DBA) unit, that is, a DBA1 unit (in this embodiment of the present invention, a level 1 DBA unit is referred to as a DBA1 unit, and a level-1.5 DBA unit is referred to as a DBA1.5 unit, and so on). The DBA1 unit is configured to collect bandwidth requests of each service port in the service adaptation device; in a permissible bandwidth range, perform calculation and judgment according to conditions such as service type, priority, and service level; allocate bandwidth to each service according to the calculation and judgment result; and deliver the bandwidth to each service port. If a sum of a collected bandwidth requests of each service port exceeds the permissible bandwidth range of the DBA1 unit, the DBA1 unit further sends the bandwidth requests to an upper-level DBA unit, for example, a DBA1.5 unit, and the upper-level DBA unit delivers permissible bandwidth after calculation and judgment.

The service access unit 10 is configured to obtain service data, where the service data may be a GEM frame, and/or TDM service data, and/or ETH service data, and the TDM service data may further be service data with fixed rate and continuous code streams such as SDH, SONET, or ATM service data.

The E-GEM adaptation unit 21 is configured to encapsulate the service data obtained by the service access unit 10 into an E-GEM frame, where the E-GEM frame includes a destination identifier and a PLI of a service.

Preferably, the service adaptation device may further include a T-CONT framer unit 31 and a T-CONT deframer unit 32.

The T-CONT framer unit 31 is configured to encapsulate the E-GEM frame of the service data into a T-CONT frame for monitoring, scheduling, transmission, and management.

The preceding service adaptation device implements service adaptation and bearing for service data in an adding direction. For processing of dropped data, in order to meet the requirements for processing data in a dropping direction, the service adaptation device may further include:
the T-CONT deframer unit 32, configured to decapsulate the T-CONT frame to obtain an E-GEM frame in a service dropping direction; and
an E-GEM deadaptation unit 22, configured to decapsulate the E-GEM frame obtained through decapsulation of the T-CONT deframer unit 32 into corresponding service data; the service access unit 10 is further configured to send the corresponding service data obtained through decapsulation by the E-GEM deadaptation unit 22 to a corresponding terminal.

To facilitate the understanding, referring to FIG. 4, a format of an E-GEM frame of the service adaptation layer in this embodiment of the present invention is shown.

The format of the E-GEM frame includes three parts: a frame header, an address identifier, and payload data. The frame header includes four fields: payload length, service identifier (for example, Port-ID), frame type, and header check. The address identifier includes a destination identifier and a source identifier. Each part is described in detail in the following.
(1) The frame header includes four fields: payload length, service identifier, frame type, and header check. To determine a starting position of the frame conveniently, the length of each field in the frame header may be fixed, for example, the length is fixed to 5 bytes. The meaning of each field is as follows:
   the payload length refers to a length of the payload data, and the payload length is measured in byte;
   the service identifier is an identifier of a service in a network node, and may be corresponding to, for example, a specific service type or physical port;
   the frame type is used to indicate a head frame, a middle frame, or a tail frame when multiple frames need to be encapsulated and borne in fragments for a packet of data with excessively long length; and
   the header check refers to Cyclic Redundancy Check (CRC) on the data in each field of the frame header.
(2) The address identifier includes the destination identifier and the source identifier, where the destination identifier represents a drop point of the service in the network, and the source identifier represents a starting point of the service in the network. The length of the address identifier field may also be fixed, for example, the destination identifier and the source identifier both are fixed to 2 bytes.
   A simple identification method may adopt a Node-IDentity (Node-ID) and the service identifier together to uniquely identify a service in the network.
   In addition, in order to adapt to a larger number of services and wider application, in addition to the Node-ID, one level of the service identifier may also be added to extend the address identifier based on the service identifier of the frame header, so that the Node-ID and the service identifier extended in the address identifier together with the service identifier in the frame header uniquely identify a service in the network.
   That is to say, each service in the network has a unique identifier, which is convenient for a network manager or a host computer to configure, track, and manage the service.
(3) The payload data: The length of the field may be variable depending on a value range of the payload length in the frame header.

When the payload length is 0, it indicates that the frame is an IDLE frame. For the IDLE frame, an address identification field may not be set, so as to ensure that the IDLE frame has a minimum length, thus achieving higher flexibility to fill empty time slots between effective frames.

For a service with large bandwidth, if the maximum value of the payload length cannot be met, the service may be fragmented to be assembled in multiple frames, which is indicated by the frame type in the frame header.

It can be seen from the format of the E-GEM frame that, compared with a GEM frame in a GPON system, in this embodiment of the present invention, the destination identifier and the source identifier of the service are added in the format of the E-GEM frame, and the service identifier of the frame header does not exist only between an Optical Line Terminal (OLT) and an ONU in one GPON like that in the GPON system. In this embodiment of present invention, the service identifier in the format of the E-GEM frame has been extended to a larger networking range, for example, may exist between any nodes in the network, and together with the destination identifier and the source identifier, give a unique identifier of a service in the whole network, so that it is convenient for scheduling the services on the whole network, thus eliminating the limitation that the GEM frame in the conventional GPON system is only used in an access layer and a point-to-multipoint structure.

In a practical application, a TDM service, an SDH/SONET/ATM service, and an ETH service may be adapted to an E-GEM frame. The ETH service may be sent to a service adaptation layer after Layer 2 Switching, and then is mapped to an E-GEM frame. Different types of services are mapped to E-GEM frames in a unified form, which are illustrated hereinafter through an example.

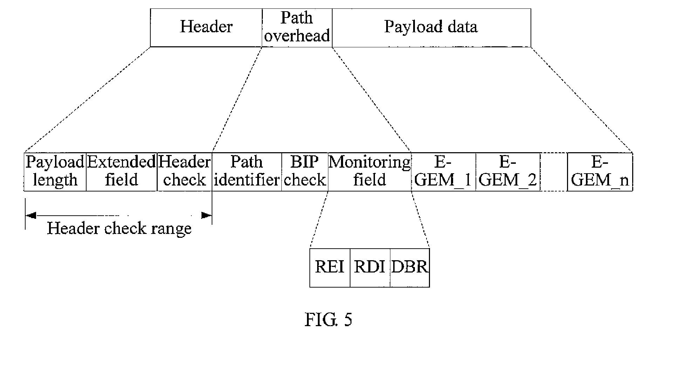

Referring to FIG. 5, a format of a T-CONT frame of a path layer according to an embodiment of the present invention is shown.

The format of the T-CONT frame includes three parts: a frame header, a path overhead, and payload data, and the parts are described in detail in the following.
(1) The frame header includes three fields: payload length, other extended field, and header check. To determine a starting position of the frame conveniently, the length of each field in the frame header may be set to be fixed. The meaning of each field is as follows:
   the payload length refers to a length of the payload data, and the payload length is measured in byte;
   the extended field, which may select comparatively important information, for example, a path identifier, to participate in the header check;
   the header check refers to CRC on the data in each field of the frame header. In an aspect, the check may be performed on a few bytes to capture and synchronize the frame header; and in another aspect, the check and correction may be performed on some comparatively important information such as the payload length and the path identifier. In this way, the reliability of service transmission is improved.
(2) The path overhead includes the path identifier, data check, and a monitoring field.
   The path identifier is a unique sequence number assigned to T-CONT frames generated by all nodes in the network, and the sequence number is allocated uniformly by the host computer to facilitate positioning, cross-connection, monitoring, and management in the process of subsequent transmission.
   The data check is used to check the quality of data transmission of the path layer, and is represented by Bit Error Rate (BER), and determine signal degradation or signal failure according to a preset threshold of the BER. For example, by adopting a Bit Interleaved Parity (BIP) check method, BIP check may be performed on the T-CONT frames, and the BER is represented by a rate of blocks with error, so as to facilitate the monitoring of the quality and performance of data transmission in a data transmission path formed by the T-CONT frames with the same identifier.
   The monitoring field may be used to transmit alarms and performance generated in the path, and a bandwidth request report or other information, so that end-to-end alarm and performance monitoring for the path may be implemented. The monitoring field may include a Remote Error Indication (REI), a Remote Defect Indication (RDI), and a Dynamic Bandwidth Report (DBR).
(3) The payload data: A data area of a T-CONT path layer is used to bear E-GEM frames, and is formed by multiple E-GEM frames. The length of the data area may be variable depending on a value range of the payload length in the T-CONT frame header. The payload length is required to be greater than or equal to a length sum of the multiple borne E-GEM frames.

When the payload length is 0, it indicates that the frame is an IDLE frame and does not bear any E-GEM frame. For the IDLE frame, a path overhead field may not be set, so as to ensure that the IDLE frame has a minimum length, thus achieving higher flexibility to fill empty time slots between effective frames.

When the payload length is greater than a length sum of the multiple borne E-GEM frames, idle bytes may be used to fill the payload length.

It should be noted that, in this embodiment of the present invention, the format of the T-CONT frame is not limited to the preceding format, and may also be other formats. For example, the comparatively important path identifier may be placed in the frame header, for example, in the extended field, so that the path identifier may also participate in the header check, and even error check and correction of the frame header. In this way, the path overhead includes the data check and the monitoring field.

In addition, to facilitate dynamic bandwidth adjustment, the path overhead may further include a dynamic bandwidth request report. In a dynamic bandwidth adjustment-based network, firstly, each node collects bandwidth requests of all services in the node, and then sends a bandwidth requirement report of the node to a dynamic bandwidth algorithm unit. The dynamic bandwidth algorithm unit performs calculation and judgment according to line bandwidth resources in the current network and conditions such as bandwidth requirements, service priority, and service level of each node, and finally delivers bandwidth allocation information to each node. The DBR here is a real-time dynamic bandwidth requirement report sent to the dynamic bandwidth algorithm unit by the node. The dynamic bandwidth algorithm unit may be located in the host computer, or may be an algorithm module in a primary node in the network.

Different types of services are encapsulated into E-GEM frames in a unified form. The E-GEM frames are classified according to a service type, a destination address, and priority, and the E-GEM frames with the same service type, and/or the same destination address, and/or the same priority are encapsulated into one T-CONT frame.

Different services may be further divided into several types such as Fixed Bandwidth (FB) type services, Assured Bandwidth (AB) type services, and Best Effort (BE) type services. Especially, according to the service type, the E-GEM frames of the same type are formed into one T-CONT frame, and T-CONT frames may also be correspondingly divided into FB type, AB type, and BE type, for example, the E-GEM frames of the TDM services or dedicated line services may form an FB type T-CONT; the E-GEM frames of on-demand services or dedicated line services may form an AB type T-CONT; and the E-GEM frames of services such as web browsing and file downloading may form a BE type T-CONT. In this way, according to the line bandwidth resources in the network and information such as the requested bandwidth and service priority of each node, a high priority T-CONT is provided with assured bandwidth and is sent preferentially, and a low priority T-CONT is allocated with bandwidth from the remaining bandwidth, thus realizing the fairness of bandwidth allocation and QoS at different levels.

Through the description of the service adaptation device provided in this embodiment and the description of data forms existing in the device, it can be known that, compared with the SDH equipment, the adaptation device may encapsulate different types of services into E-GEM frames in a unified form. In this way, multi-service access in a unified form with fewer levels (only three levels) is ensured, and intermediate processing is simplified, so that the implementation is simple and the cost is saved.

Compared with the GPON system, benefiting from the advantages of the T-CONT frame in the GPON system, the Operation, Administration, Management (OAM) function is enhanced, and the limitation of use in only an adding direction within the access layer in the GPON may be eliminated, so that a wider application may be achieved, and various networking forms are supported; in addition to bearing the TDM service and the ETH service conveniently, the smooth interconnection with the GPON signal may also be implemented, so as to better support FTTx development in the future.

By using a service adaptation device provided in this embodiment of the present invention, different multiple types of services may be encapsulated into E-GEM frames in a service adaptation layer in a unified form, so as to implement access and adaptation of multiple types of services in a unified form simply and conveniently, which is convenient for a network upper layer to uniformly manage and transmit various service data.

### Embodiment 2

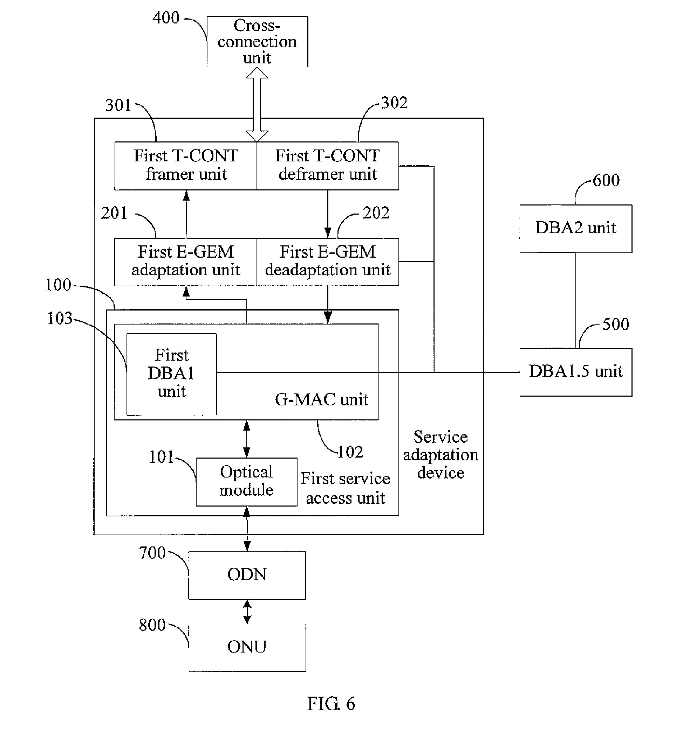

As shown in FIG. 6, this embodiment provides a service adaptation device. This embodiment is a preferred embodiment of the service adaptation device provided in Embodiment 1, where the service data obtained by the service access unit 10 in FIG. 3 is GEM data.

The service adaptation device includes a first service access unit 100 and a first E-GEM adaptation unit 201.

It should be noted that, to describe conveniently, in this embodiment, the service access unit 10 in FIG. 3 is specifically referred to as the first service access unit 100; the T-CONT framer unit 31 in FIG. 3 is specifically referred to as a first T-CONT framer unit 301; the T-CONT deframer unit 32 in FIG. 3 is specifically referred to as a first T-CONT deframer unit 302; the E-GEM adaptation unit 21 in FIG. 3 is specifically referred to as the first E-GEM adaptation unit 201; and the E-GEM deadaptation unit 22 in FIG. 3 is specifically referred to as a first E-GEM deadaptation unit 202.

The first service access unit 100 is configured to .obtain a GEM frame; and the first E-GEM adaptation unit 201 is configured to encapsulate the obtained GEM frame into an E-GEM frame.

Preferably, the first service access unit 100 further includes an optical module 101 and a GPON-Media Access Control (G-MAC) unit 102.

The optical module 101 is configured to convert an optical signal sent by an ONU 800 through an ODN (including an optical splitter and a fiber) 700 into an electrical signal.

The G-MAC unit 102 is configured to decapsulate a GPON Transmission Convergence (GTC) frame in the electrical signal converted by the optical module 101 to obtain a T-CONT frame, and further decapsulate the T-CONT frame to obtain a GEM frame.

The service data obtained in the first service access unit 100 is data transmitted in a network of a GPON system; the optical module 101 converts the optical signal in a burst mode sent by the ONU 800 and transmitted through the ODN 700 into an electrical signal; and the G-MAC unit 102 specifically decapsulates the GTC frame to obtain each T-CONT frame, and further decapsulates the T-CONT frame to obtain a GEM frame.

The service adaptation device may further include the first T-CONT framer unit 301, configured to encapsulate the GEM frame obtained by the G-MAC unit 102 into an E-GEM frame, and further encapsulate the E-GEM frame into a T-CONT frame.

The first T-CONT framer unit 301 is optional, and a signal sent to a cross-connection unit 400 by the service adaptation device provided in this embodiment may be an E-GEM frame or a T-CONT frame. If the former is selected as an interface between the service adaptation device and the cross-connection unit 400, it may facilitate implementation of "centralized E-GEM local switching" at the cross-connection unit 400, and the "centralized E-GEM local switching" is applicable to service switching between different tributary ports inside the current node, so as to reduce the fluctuation of and the influence on the bandwidth between each node in the network as much as possible. If the latter is selected, it may ensure the consistency of the interfaces between each unit (including a line unit and the service adaptation device) in the node and the cross-connection unit 400, which facilitates flexible configuration of cross-connection capacity.

To facilitate the understanding of this embodiment, logic units connected to the service adaptation device are also shown in FIG. 6, and include the cross-connection unit 400, a DBA1.5 unit 500, a DBA2 unit 600, the ODN 700, and the ONU 800.

The DBA1.5 unit 500 is located inside the node, is configured to adjust bandwidth between more than one service adaptation device inside the node, and is generally referred to as a "level-1.5 DBA". The level-1.5 DBA unit 500 performs calculation and judgment according to information such as bandwidth requirements, service type, priority, and QoS service level reported by each service adaptation device inside the node, and finally sends a bandwidth allocation result to each service adaptation device, so as to realize bandwidth sharing and fair competition among each service adaptation device inside the node.

To facilitate the understanding of the description of the DBA1.5 unit, it should be further understood that, the first service access unit 100 in the service adaptation device provided in this embodiment may further include a first DBA1 unit 103; and definitely, the first DBA1 unit 103 may be specifically located in the G-MAC unit 102.

The first DBA1 unit 103 is configured to collect bandwidth requirements of services in each ONU, and in a permissible bandwidth range of the first DBA1 unit 103, perform bandwidth allocation and adjustment on the services accessed by each ONU according to the bandwidth requirements, for example, perform calculation and judgment according to information such as service type, priority, and service level, and then allocate bandwidth for the services in each ONU. When total bandwidth requested by the ONUs exceeds the permissible bandwidth range of the first DBA1 unit 103, the first DBA1 unit 103 also sends a bandwidth requirement report to an upper-level DBA unit (for example, the DBA1.5 unit), receive bandwidth allocation information that is delivered, according to the bandwidth requirement report, by the upper-level DBA unit, and perform bandwidth adjustment on the services accessed by the ONUs according to the bandwidth allocation information. It should be noted that, if bandwidth allocated for the first DBA1 unit by the upper-level DBA unit still cannot satisfy a sum of bandwidth requests of the services in each ONU, receiving and sending of high priority services is ensured, and sending of low priority services is suppressed, that is, the high priority services preempt the low priority services.

The first DBA1 unit 103 may be a DBA module of the GPON system, here may also be referred to as a "level-1 DBA", and is configured to perform bandwidth adjustment and sharing between each service port in all the ONUs connected to the service adaptation device. For a detailed description of the DBA1 unit, reference may be made to the relevant description in the existing GPON system.

The DBA2 unit (also referred to as a level 2 DBA unit) 600 is an independent bandwidth adjustment algorithm module, and may be located in a network host computer, or inside a primary node (S node) in FIG. 1. As an upper-level DBA unit of the DBA1.5 unit, the DBA2 unit is configured to perform bandwidth adjustment between each node of the network according to the bandwidth requirement report sent by the DBA1.5 unit.

The service adaptation device may perform processing on service transmission, so as to implement interconnection with a network of the GPON system.

For data transmitted in a dropping direction, the service adaptation device may further include the first E-GEM deadaptation unit 202.

The first E-GEM deadaptation unit 202 is configured to decapsulate the E-GEM frame obtained from the path layer into a GEM frame.

The first service access unit 100 is further configured to perform processing opposite to that in an adding direction on the GEM frame obtained through decapsulation of the E-GEM frame in the dropping direction, and the processing may specifically be:

The G-MAC unit 102 is further configured to encapsulate the GEM frame obtained through the decapsulation of the E-GEM frame in the dropping direction into a T-CONT data frame of the GPON system, and further encapsulate the T-CONT data frame into a GTC frame.

The optical module 101 is further configured to convert the GTC frame from an electrical signal into an optical signal, and send the optical signal to ONUs through the ODN.

The device provided in this embodiment definitely may further include the first T-CONT deframer unit 302.

The first T-CONT deframer unit 302 is configured to decapsulate the obtained T-CONT frame in the dropping direction, so as to obtain an E-GEM frame in the dropping direction.

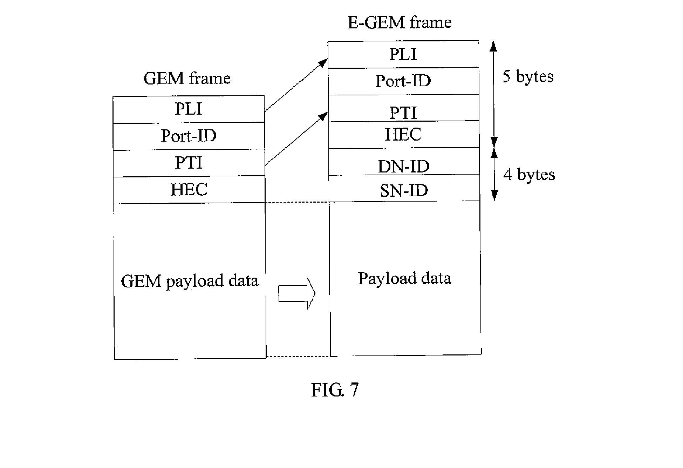

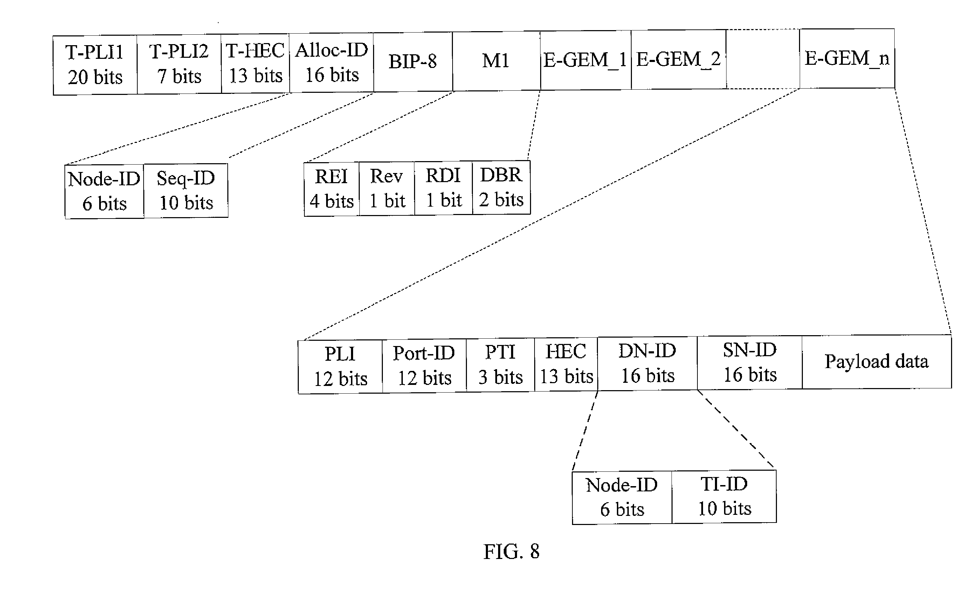

For a better understanding of the conversion procedure of data frames in the service adaptation device, reference is made to FIG. 7 and FIG. 8, where FIG. 7 is a schematic diagram of mapping a GEM frame of a GPON system to an E-GEM frame of this embodiment.

For the mapping from the GEM frame to the E-GEM, a service identifier (for example, Port-ID) in the original GEM frame exists only between an OLT and an ONU of a GPON tributary, however, after the E-GEM frame is added with a source identifier and a destination identifier of the service, the service identifier (for example, Port-ID) is applied to a larger network range, where the service identifier (for example, Port-ID), together with a TI-ID and a Node-ID, identifies a larger range of services in the network. Therefore, a value needs to be re-assigned to the Port-ID and a corresponding Header Error Control (HEC) check needs to be re-calculated, and other PLI values and PTI values and payload data may be all directly copied to corresponding fields of the E-GEM frame.

In addition, it should be noted that, FIG. 7 also shows a Destination Node IDentity (DN-ID) and a Source Node IDentity (SN-ID), where the DN-ID refers to a destination node identifier and the SN-ID refers to a source node identifier.

FIG. 8 shows a structure of an E-GEM frame and a structure of a T-CONT frame implemented after improving the GPON system.

### (1) Service Adaptation Layer

A. The definition of a frame header may completely use the definition of the existing GEM frame header, and the frame header has 5 bytes totally, and meaning of each field corresponding to that of the E-GEM frame header is as follows.

Payload Length Indication (PLI) of 12 bits is used to indicate the length of payload data in byte, and the maximum permissible payload data is 4095 bytes. If user data is greater than the maximum length, the user data must be divided into fragments that are smaller than 4095 bytes for transmission.

Port-ID (service identifier) of 12 bits may at most provide 4096 unique service identifiers.

Payload Type Indication (PTI) of 3 bits is used to indicate the type of payload data and corresponding processing method, and for details, see Table 1.

HEC provides CRC of 13 bits.

**Table 1**

| **PTI** | **Meaning** |
|---|---|
| 000 | User data, non-congested, non-tail frame |
| 001 | User data, non-congested, tail frame |
| 010 | User data, congested, non-tail frame |
| 011 | User data, congested, tail frame |
| 100 | Non-user data, OAM data |
| 101 | Reserved |
| 110 | Reserved |
| 111 | Reserved |

B. Based on the GEM frame of the GPON system, the destination identifier and the source identifier are added, which may be set to 16 bits, and divided into two identity fields: a Node-ID of 6 bits and a Tributary Interface Identity (TI-ID) of 10 bits. The former indicates that there are at most 64 nodes in the network, and the latter, together with the Port-ID of the frame header, identifies a larger range of service types. In this way, the combination of three identifiers: Node-ID+TI-ID+Port-ID, may hierarchically and uniquely identify each service in the network. For example, the TI-ID may correspond to a tributary board or port inside network node equipment.

The GPON tributary has multiple ODN interfaces, and each ODN interface may be allocated with a TI-ID, and different services on the ONUs belonging to the same ODN are further allocated with different Port-IDs.

For a TDM service, for example, an E1 service, TI-IDs may be allocated first according to different boards, and then different Port-IDs are allocated for multiple E1 interfaces inside a board, or TI-IDs may be directly allocated for all E1 interfaces inside the node.

For an ETH service, the TI-IDs may be physical ports, and the Port-IDs correspond to Virtual Local Area Network (VLAN) identifiers.

In short, various methods may be adopted to identify the service.

C. The length of payload data area is designated by the PLI and is variable in a range of 0-4095 bytes.

### (2) Path Adaptation Layer

A. For the frame header, in addition to a payload data length T-PLI1 of the T-CONT frame, other extended identifiers, for example, T-PLI2 (that is, T-CONT PLI) in the Figure, may also be considered. Considering that permissible bandwidth of a T-CONT path for transmitting data is up to 2.5 G, 10 G, or even larger rate range, and the length of the T-CONT frame (including the payload data area) reaches 38880 bytes, 155520 bytes, or more bytes, the indication range of the T-PLI1 may be set to 20 bits. A T-HEC check may learn from the existing CRC of 13 bits.

B. In a path overhead area, a path identifier (for example, Alloc-ID) may be considered to be set to 2 bytes, 16 bits in total, and divided into two identity fields: a Node-ID of 6 bits and a Seq-Identity (Seq-ID) of 10 bits, which means that at most 1024 T-CONT frames can be grouped in one node. Considering that the Alloc-ID is an important indication, the Alloc-ID may be arranged in the frame header area, for example, to replace the extended identifier T-PLI2 to participate in the check and error correction of the frame header. Simple BIP-8 check may be adopted for data check. A monitoring byte M1 includes 4-bit REI, 1-bit RDI, and 2-bit DBR, and meanings of DBRs of different data are detailed in Table 2.

**Table 2**

| DBR | Data Type |
|---|---|
| 00 | Normal data |
| 01 | Bandwidth request (8 Bytes) |
| 10 | Reserved |
| 11 | Reserved |

C. The length of the payload data area is designated by the T PLI1, and the payload data area includes multiple E-GEM frames.

In the GPON system, the T-CONT frame is only applicable to sending data from multiple points to one point in an uplink direction between the ONU and the OLT in an access layer. The concept of T-CONT is put forward in the GPON system mainly for implementing QoS requirements of different service types, for management overhead, except Physical Layer OAM upstream (PLOAMu), Physical Layer Sequence upstream (PLSu), and Dynamic Bandwidth Report upstream (DBRu), other management overhead, for example, data check, performance, and alarm monitoring, is not defined, therefore, the Operation, Administration and Management (OAM) capability is weak, so that other functions, for example, cross-connection, monitoring, and protection, cannot be implemented, and extension to wider network application range cannot be achieved.

In this embodiment of the present invention, the T-CONT frame of the path layer reserves a dynamic bandwidth reporting function, and may initiate a DBA request when bandwidth of the borne service type changes. In the OAM aspect, a frame header positioning function is added to adapt to wider application scenarios; a data check function, performance and alarm monitoring are added, which may implement path layer end-to-end monitoring and management, and is qualified to implement the protection and switchover of the path layer. In this embodiment of the present invention, the T-CONT frame has perfect OAM function, and in allocated time slots of the T-CONT frame, may function as a truly independent transmission path. In addition, compared with a rigid transmission path Virtual Container (VC) with a fixed length that cannot be adjusted in an SDH system, the length of the T-CONT frame in this embodiment of the present invention may vary in a unit of 1 byte, so that bandwidth utilization is high; moreover, in combination with a whole network-oriented DBA mechanism, the dynamic bandwidth adjustment may be conveniently implemented, which is especially suitable for future services such as Internet Protocol Television (IPTV) and Bandwidth On Demand (BOD).

Through the description of this embodiment, by using the service adaptation device and encapsulating a GEM frame into an E-GEM frame, the limitation of use in only an uplink direction within the range of an access layer in the GPON system may be eliminated, so that wider application scenarios may be extended to, and various networking forms are supported; in addition to convenient bearing of a TDM service and an ETH service, the natural interconnection with a GPON signal may be achieved, so as to support FTTx development in the future in a better way.

### Embodiment 3

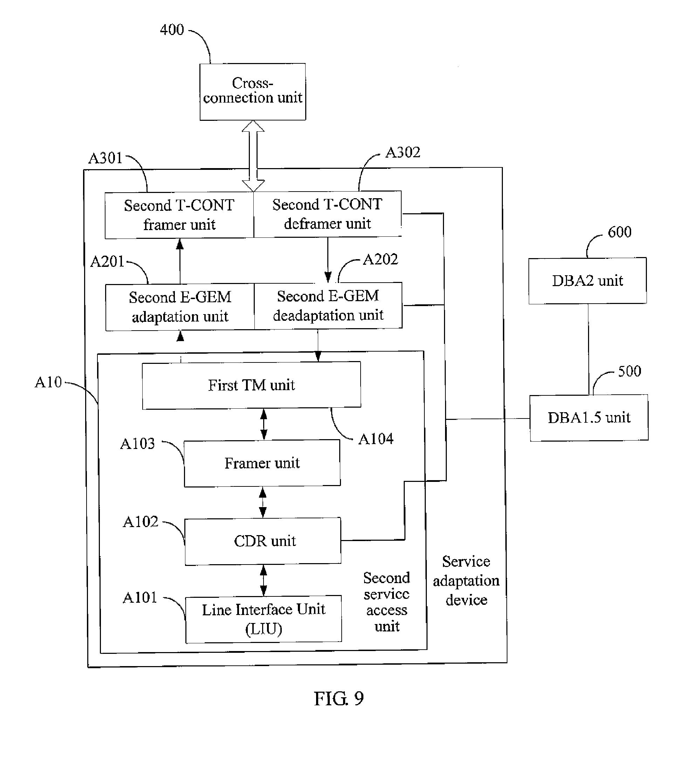

As shown in FIG. 9, this embodiment provides a service adaptation device. This embodiment is a preferred embodiment of the service adaptation device provided in Embodiment 1, where the service data obtained by the service access unit 10 in FIG. 3 is TDM data.

The service adaptation device includes a second service access unit A10 and a second E-GEM adaptation unit A201.

It should be noted that, to facilitate the description, in this embodiment, the service access unit 10 in FIG. 3 is specifically referred to as the second service access unit A10; the T-CONT framer unit 31 in FIG. 3 is specifically referred to as a second T-CONT framer unit A301; the T-CONT deframer unit 32 in FIG. 3 is specifically referred to as a second T-CONT deframer unit A302; the E-GEM adaptation unit 21 in FIG. 3 is specifically referred to as the second E-GEM adaptation unit A201; and the E-GEM deadaptation unit 22 in FIG. 3 is specifically referred to as a second E-GEM deadaptation unit A202.

The service adaptation device may further include any one or more of the second E-GEM deadaptation unit A202, the second T-CONT framer unit A301, or the second T-CONT deframer unit A302. For the description of the second T-CONT framer unit A301 and the second T-CONT deframer unit A302, reference may be made to the description of the first T-CONT framer unit 301 and the first T-CONT deframer unit 302 in Embodiment 2 respectively, which are not repeated here.

The second service access unit A10 further includes a Line Interface Unit (LIU) A101 and a Clock and Data Recovery (CDR) unit A102.

The LIU A101 is configured to demodulate and decode an obtained TDM service signal, that is, to demodulate and decode an encoded and modulated TDM service signal received from a line, for example, a cable.

The CDR unit A102 is configured to recover a clock and data of the TDM service signal decoded by the LIU A101, that is, to obtain TDM service data.

Preferably, the second service access unit A10 may further include a framer unit A103.

The framer unit A103 is configured to monitor and manage the TDM service data when the TDM service data needs to be deframed (in a dropping direction) or framed (in an adding direction), so as to facilitate the fault analysis and positioning of the TDM service signal on a transmission path.

The second E-GEM adaptation unit A201 is configured to convert the obtained TDM service data into an E-GEM frame.

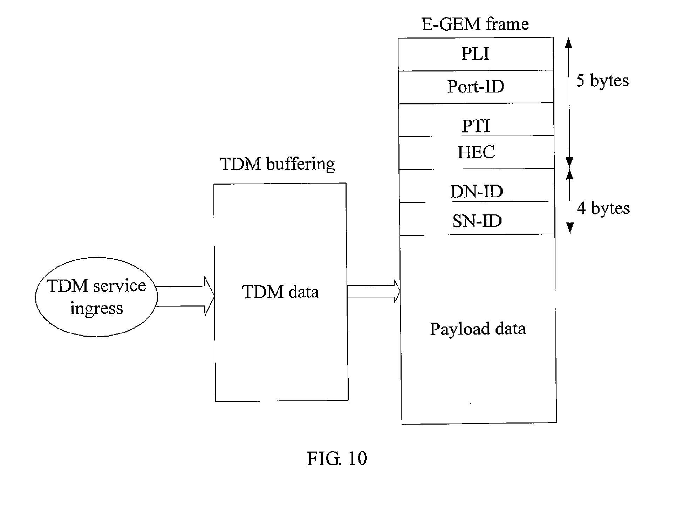

FIG. 10 is a schematic diagram of mapping a TDM service to an E-GEM frame.

For the mapping of the TDM service, according to the difference between a TDM service rate and an E-GEM frame rate, when data buffering is increased or decreased by 1 byte, the value of PLI may be adaptively adjusted once in ±1 byte range. Taking an E1 service (2.048 Mbps signal) as an example, when frame frequency is 8 KHz, and an E1 signal and the E-GEM frame are synchronized, the value of the PLI is fixed to 32 bytes; and in case of clock asynchronization between the E 1 signal and the E-GEM frame, that is, a frequency difference, the value of the PLI is chosen from 31, 32, and 33. Because the unit of the value of the PLI is byte, when the E1 signal is mapped to a data payload area of the E-GEM frame, the data buffering must wait for 8 bits, that is, forming 1 byte, the value of the PLI can be adjusted once in the ±1 byte range.

The working principle of the second E-GEM deadaptation unit A202 is opposite to that of the second E-GEM adaptation unit A201, and is not repeated here.

It should be further noted that, similar to FIG. 6, logic units connected to the service adaptation device are also shown in FIG. 9, and include the cross-connection unit 400, the DBA1.5 unit 500, and the DBA2 unit 600, and for the relevant description, reference is also made to the description of FIG. 6.

It should be further noted that, the service adaptation device of the TDM service does not include the DBA1 unit that is explicitly shown in FIG. 6. The TDM service has continuous code streams and fixed rate as well as high requirements for delay and jitter, and belongs to FB service, and bandwidth and delay of the TDM service need to be strictly ensured. Therefore, when service of any rate is accessed, clock frequency information (that is, bandwidth requirement information) of the TDM service detected by the CDR unit A102 needs to be sent to the DBA1.5 unit, and the DBA1.5 unit strictly ensures the bandwidth of the service. Here, the CDR unit A102 is configured to send the clock frequency information to the DBA1.5 unit. A simpler method is that: when the rate of the accessed TDM service signal is known, the reporting process of the CDR unit A102 may be avoided, and the DBA2 unit directly delivers and assigns uplink bandwidth of the service.

Through the description of the service adaptation device provided in this embodiment, the device may encapsulate TDM service data into an E-GEM frame, so as to meet the high requirements for delay of the TDM service, and implement the access to clock-sensitive services.

### Embodiment 4

Still as shown in FIG. 9, the embodiment of the present invention provides a service adaptation device, and the device includes all the logic units in the device provided in Embodiment 3. The service adaptation device provided in this embodiment is similar to that provided in Embodiment 3 (referring to the preceding embodiments, which is not repeated here), and the difference is that, the second service access unit A10 may further include a first Traffic Management (TM) unit A104.

The first TM unit A104 is configured to convert TDM service data obtained in a CDR unit A102 into a GEM frame.

The first TM unit A104 may be further configured to convert the GEM frame into TDM service data in a dropping direction.

At this time, the E-GEM adaptation unit (which is the second E-GEM adaptation unit A201 in FIG. 9) is specifically configured to encapsulate the GEM frame of the TDM service data converted by the first TM unit A104 into an E-GEM frame.

For the conversion of the GEM frame into the E-GEM frame, reference may be made to the description of FIG. 7; and for the adaptation of the TDM service data to the GEM frame, reference may be made to the existing GPON technology, which are not repeated here.

Preferably, the first TM unit A104 may be further configured to control traffic of the service, and may specifically be: monitoring service bandwidth and performing smoothing processing, reporting a bandwidth requirement report to an upper-level DBA unit, and obtaining bandwidth allocation information that is delivered, according to the reported bandwidth requirement report, by the upper-level DBA unit. For example, after receiving the reported bandwidth requirement report, the upper-level DBA unit performs calculation and judgment according to the reported bandwidth requirement report, and then delivers bandwidth allocation information. For a TDM service with fixed rate and continuous code streams, the occupied bandwidth is the rate.

Through the description of the service adaptation device provided in this embodiment, the device may encapsulate TDM service data into an E-GEM frame, so as to meet the requirements for bandwidth and delay of the TDM service, and implement the access to clock-sensitive services.

### Embodiment 5

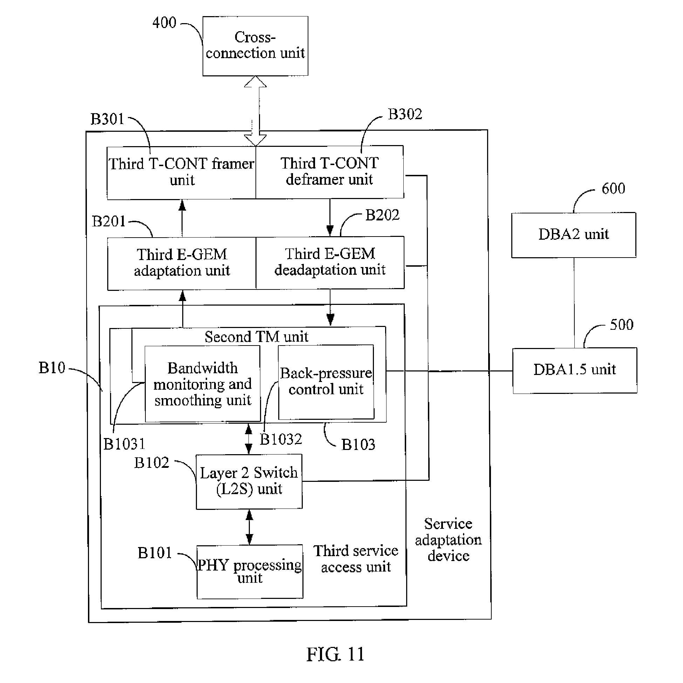

As shown in FIG. 11, this embodiment provides a service adaptation device. This embodiment is a preferred embodiment of the service adaptation device provided in Embodiment 1, where the service data obtained by the service access unit 10 in FIG. 3 is ETH service data.

The service adaptation device includes a third service access unit B10 and a third E-GEM adaptation unit B201.

It should be noted that, to facilitate the description, in this embodiment, the service access unit 10 in FIG. 3 is specifically referred to as the third service access unit B10; the T-CONT framer unit 31 in FIG. 3 is specifically referred to as a third T-CONT framer unit B301; the T-CONT deframer unit 32 in FIG. 3 is specifically referred to as a third T-CONT deframer unit B302; the E-GEM adaptation unit 21 in FIG. 3 is specifically referred to as the third E-GEM adaptation unit B201; and the E-GEM deadaptation unit 22 in FIG. 3 is specifically referred to as a third E-GEM deadaptation unit B202.

The service adaptation device may further include any one or more of the third E-GEM deadaptation unit B202, the third T-CONT framer unit B301, and the third T-CONT deframer unit B302. For the description of the third T-CONT framer unit B301 and the third T-CONT deframer unit B302, reference may be made to the description of the first T-CONT framer unit 301 and the first T-CONT deframer unit 302 respectively in Embodiment 2.

The third service access unit B 10 further includes a PHY processing unit B101.

The PHY processing unit B101 is configured to obtain ETH service data, that is, to receive ETH service data sent from a line, for example, a cable or fiber, specifically, to demodulate and decode a signal transmitted on the line, convert the signal into a digital signal, and parse the ETH service data from the digital signal.

The third E-GEM adaptation unit B201 is configured to convert the ETH service data obtained by the PHY processing unit B101 into an E-GEM frame, and send the E-GEM frame to the third T-CONT framer unit B301.

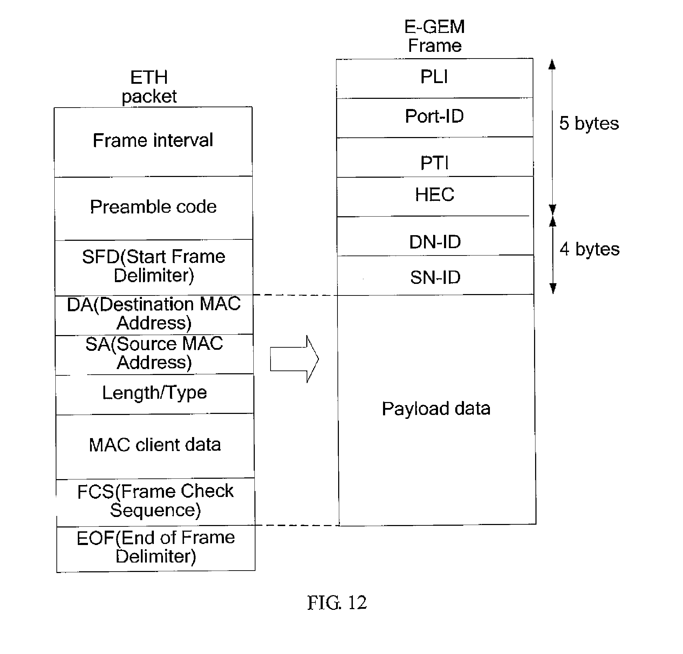

It should be further noted that, for the process of converting the ETH service data into the E-GEM frame, reference may be made to a schematic diagram as shown in FIG. 12.

An ETH frame structure is the same as that in the prior art, and is not repeated here.

For the mapping of the ETH service, a method of discarding an ETH frame interval and a preamble code may be adopted, where only the integrity of the ETH frame is ensured, the length of ETH frame data may be determined from the length/type field in the ETH frame; furthermore, as the length of other fields of the ETH frame is fixed, the value of the PLI may be determined; and then, the ETH frame is mapped to data area of the E-GEM frame. When the length of an excessively long ETH frame is greater than 4095 bytes, the excessively long ETH frame may be transmitted in fragments through multiple consecutive E-GEM frames.

The working principle of the third E-GEM deadaptation unit B202 is opposite to that of the third E-GEM adaptation unit B201, and is not repeated here.

Preferably, the third service access unit B10 may further include a Layer 2 Switch (L2S) unit B 102.

The L2S unit B102 is configured to perform processing such as convergence, aggregation, or switching on the obtained ETH service data. For the ETH service, currently, there are four rates: 10 M/100/1 G/10 G. Taking the rate of 1 G as an example, the real rate on a cable is 1.25 Gbits/s, that is, 1.25 Gbits per second, which is referred to as "line rate". The ETH services are all transmitted with MAC frames, where each MAC frame includes a frame header and a frame tail, and a complete ETH frame between the frame header and the frame tail is referred to as a "packet". A large number of empty slots exist between adjacent packets, and the empty slots are filling codes, and are referred to as a "frame interval". These filling codes are all invalid data, and influence the bandwidth efficiency and waste the cable investment and port cost. In order to save the port and cost, empty time slots in multiple 1 G ports connected through an ETH interface on a tributary board in equipment need to be removed, and then valid data in each port forms a full 1 G port (or a 10G port) for transmission through other boards or interfaces of the equipment. The full port is referred to as an uplink port, and the "removal of the empty time slots" is commonly known as "squeezing water", and the process of "squeezing water" is referred to as "bandwidth convergence"; and "aggregation" refers to transmission from multiple ports to the same port. Aggregation and convergence are performed simultaneously.

It should be further noted that, similar to FIG. 6, logic units connected to the service adaptation device are also shown in FIG. 11, and include the cross-connection unit 400, the DBA1.5 unit 500, and the DBA2 unit 600, and for the relevant description, reference is also made to the description of FIG. 6.

It should be further noted that, in this embodiment, the DBA1 unit that is explicitly shown in FIG. 6 (that is, the first DBA1 unit in FIG. 6) does not exist, and the L2S unit B102 may be used here to implement the DBA1 unit. After local switching of the received ETH service data is finished, the L2S unit B102 performs aggregation and bandwidth convergence on the remaining service data, reports bandwidth that needs to be finally sent in an adding direction as a bandwidth request of the DBA1 unit in FIG. 6 to an upper-level DBA unit, for example, a DBA1.5 unit, and after receiving bandwidth information delivered by the upper-level DBA unit after calculation and judgment, obtains the allocated bandwidth. If the bandwidth cannot satisfy the requirement, for different services in different physical ports or in the same physical port, service type (for example, FB type, AB type, or BE type services), priority, and QoS service level indicated by different VLAN identifiers further need to be distinguished. The ingress traffic of the service port is controlled through a Pause frame (an OAM frame indicating a pause in transmission) or a back-pressure mechanism. It can be seen that the L2S unit may completely implement the function of the DBA1.

Through the description of the service adaptation device provided in this embodiment, the device may encapsulate ETH service data into an E-GEM frame for transmission in a new network. Compared with a method for bearing data services in an SDH, through the device provided in this embodiment, bandwidth utilization is high, adjustment is more convenient, and implementation is simple.

### Embodiment 6

Still as shown in FIG. 11, this embodiment of the present invention provides a service adaptation device. The service adaptation device provided in this embodiment is similar to that provided in Embodiment 5, and the difference lies in that the third service access unit B10 may further include a second TM unit B103.

The second TM unit B103 is configured to convert obtained ETH service data into a GEM frame.

The third E-GEM adaptation unit B201 is specifically configured to encapsulate the GEM frame converted by the second TM unit B103 into an E-GEM frame.

The second TM unit B103 may be further configured to convert the GEM frame into ETH service data in a dropping direction. For the adaptation and deadaptation of the ETH service data to the GEM frame, reference may be made to the existing GPON technology, which is not repeated here. For the conversion of the GEM frame into the E-GEM frame, reference may be made to the description of FIG. 7.

Other logic units in the service adaptation device provided in this embodiment are the same as those in the device provided in Embodiment 5, and reference may be made to the description of Embodiment 5.

Preferably, the second TM unit B 103 may further implement a dynamic bandwidth adjustment function, that is, configured to perform monitoring and smoothing on bandwidth, report a bandwidth result after monitoring and smoothing to an upper-level DBA unit, for example, a DBA1.5 unit, receive bandwidth allocation information delivered by the upper-level DBA unit, and perform bandwidth adjustment according to the bandwidth allocation information. Specifically, when the L2S unit is not used, a bandwidth monitoring and smoothing unit and a back-pressure control unit need to be designed in the TM module to report a bandwidth requirement report, receive bandwidth allocation information, and perform traffic buffering and traffic back-pressure control, so that completion of service transmission with the average bandwidth processing capability is ensured. Therefore, the second TM unit B 103 may further include a bandwidth monitoring and smoothing unit B1031 and a back-pressure control unit B1032.

The bandwidth monitoring and smoothing unit B1031 is configured to monitor data service bandwidth and perform smoothing processing, and then report a bandwidth requirement report to an upper-level DBA unit, for example, report a bandwidth requirement report to the DBA1.5 unit.

The back-pressure control unit B1032 is configured to receive bandwidth allocation information that is delivered, according to the bandwidth requirement report reported by the bandwidth monitoring and smoothing unit B1031, by the upper-level DBA unit, for example, the DBA1.5 unit after calculation and judgment. Only when the allocated bandwidth cannot satisfy the requirement, the back-pressure control is started. Through the current traffic buffering and back-pressure mechanism, receiving and sending of high priority services are ensured, and sending of low priority services is suppressed, that is, the high priority services preempt the low priority services.

Through the description of the service adaptation device provided in this embodiment, the device may encapsulate ETH service into an E-GEM frame. Compared with a method for bearing data services in an SDH system, through the device provided in this embodiment, bandwidth utilization is high, dynamic bandwidth adjustment function is implemented, and implementation is simple.

### Embodiment 7

This embodiment provides a service adaptation device. It should be noted that, the service adaptation devices provided in Embodiments 2 to 6 are all service adaptation devices of a single type, and in physical implementation, the service adaptation devices provided in Embodiments 2 to 6 may be boards that have the functions described in each embodiment, and multiple boards are placed in the node N or node S as shown in FIG. 1. In fact, in order to expand the function of each board, the access and adaptation methods for different types of services provided in Embodiments 2 to 6 may be combined in any manner, and designed into one board, so as to obtain a multi-service adaptation device provided in this embodiment.

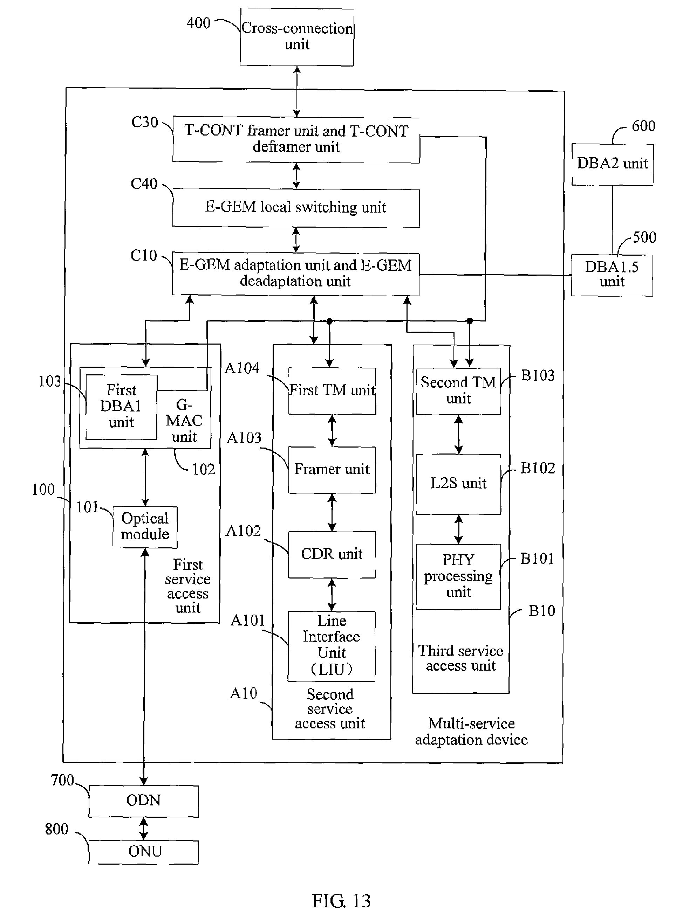

FIG. 13 shows a multi-service adaptation device formed by combining the three service adaptation devices provided in Embodiments 2, 4, and 6, and in FIG. 13:
An E-GEM adaptation unit includes the first E-GEM adaptation unit 201 as shown in FIG 6, the second E-GEM adaptation unit A201 as shown in FIG. 9, and the third E-GEM adaptation unit B201 as shown in FIG. 11; and the E-GEM adaptation unit may be configured to adapt various services to an E-GEM frame.

An E-GEM deadaptation unit includes the first E-GEM deadaptation unit as shown in FIG. 6, the second E-GEM deadaptation unit as shown in FIG. 9, and the third E-GEM deadaptation unit as shown in FIG. 11; and the E-GEM deadaptation unit may be configured to deadapt an E-GEM frame in a dropping direction into various corresponding service data, that is, convert the E-GEM frame into a GEM frame, TDM data, or ETH service data.

The E-GEM adaptation unit and the E-GEM deadaptation unit are both labeled as C 10 in the accompanying drawings, and in the same way, the T-CONT framer unit and the T-CONT deframer unit are both labeled as C30 in the accompanying drawings.

As shown in FIG. 13, a service access unit of the service adaptation device provided in this embodiment includes the first service access unit 10 as shown in FIG. 6, the second service access unit A10 as shown in FIG. 9, and the third service access unit B10 as shown in FIG. 11, and for the specific description, reference may be made to the description of Embodiments 2 to 6.

When the service adaptation device provided in this embodiment receives various service data, the various service data received by the service access unit is encapsulated into E-GEM frames in a unified form by the E-GEM adaptation unit, and multiple E-GEM frames may be further encapsulated into a T-CONT frame according to the principles such as the same service type, the same destination address, and the same priority. With reference to the dynamic bandwidth adjustment process of the GPON tributary, the TDM service tributary, and the ETH service tributary in Embodiments 2 to 6, the multi-service adaptation device in this embodiment also has functions of bandwidth monitoring, reporting, bandwidth allocation information receiving, and service bandwidth adjustment, which are specifically as follows:
First, all services have corresponding bandwidth monitoring modules, for example, the first DBA1 unit of the GPON tributary, the CDR unit of the TDM service, and the L2S unit or the TM unit of the ETH service; a result obtained by the bandwidth monitoring module, that is, a bandwidth requirement report, is sent to an upper-level DBA unit (for example, the DBA1.5 unit, and for the reporting method, reference is made to the description of the preceding three tributary services); then, the upper-level DBA unit performs calculation and judgment, and allocates bandwidth according to information such as the service type, the priority, and the QoS service level of various services in a multi-service tributary unit in this embodiment; and finally bandwidth allocation information of the services is delivered to a bandwidth control module (for example, the first DBA1 unit of the GPON tributary, and the L2S unit or TM unit of the data service, and configuration is directly performed for the TDM service) of each service, so as to control ingress bandwidth traffic of each service. High priority FB type, AB type, and BE type services may sequentially preempt low priority services, so that the high priority services in the tributary unit are allocated with bandwidth and transmitted preferentially, and the low priority services are allocated with bandwidth from the remaining bandwidth, so as to realize bandwidth sharing and fair competition among various services, and to achieve the purpose of non-blocking transmission.

Preferably, as shown in FIG. 13, the service adaptation device provided in this embodiment may further include an E-GEM local switching unit C40. According to a destination identifier and a source identifier in the E-GEM frame, if the destination identifier and the source identifier are both pointed to ports of the node, it indicates that the service needs to be locally switched. A service identifier is further checked, and the service is switched to another port in the node indicated by the destination identifier. The E-GEM frame that does not need to be locally switched is sent to the T-CONT framer unit.

Only after the E-GEM local switching unit C40 in the service adaptation device performs local switching between different services, the remaining services and bandwidth are sent to the T-CONT framer unit, so as to reduce the fluctuation of bandwidth between network nodes.

It can be seen from the preceding embodiment that, compared with the conventional SDH system, the service adaptation device in this embodiment of the present invention may uniformly encapsulate various forms of services into E-GEM frames at a service adaptation layer, and various service types only need to be adapted through one layer of E-GEM frames, and then are directly adapted to a T-CONT frame of a path layer. Therefore, the technology is simple, levels are few, intermediate processing is greatly simplified, and cost is saved. Furthermore, management overhead of a two-layered structure is simple and reasonable, and can reflect the major alarm and performance monitoring; the length of a two-layer data frame may be adjusted in a unit of 1 byte, so that bandwidth utilization is high, and in combination with a DBA mechanism, dynamic bandwidth adjustment may be implemented; and a QoS implementation mechanism is flexible and convenient.

Compared with the GPON system, benefiting from the advantages of the T-CONT frame in the GPON system, an OAM function is enhanced, and the limitation of use in only a point-to-multipoint structure in an uplink direction within the range of an access layer in the GPON system may be eliminated, so that wider application scenarios may be extended to, and various networking forms are supported; in addition to convenient bearing of a TDM service and an ETH service, the natural interconnection with a GPON signal may be achieved, so as to support FTTx development in the future in a better way.

The service adaptation device provided in this embodiment of the present invention may uniformly encapsulate various forms of services into E-GEM frames at the service adaptation layer, multiple E-GEM frames are combined into one T-CONT frame according to the principles such as the same service type, the same destination address, and the same priority at the path layer, and QoS requirements of different services may be conveniently implemented according to the priority of the T-CONT type.

In preceding Embodiments 1 to 7, the devices provided in the technical solution are described, and hereinafter, a method provided in the technical solution is described in Embodiment 8.

### Embodiment 8

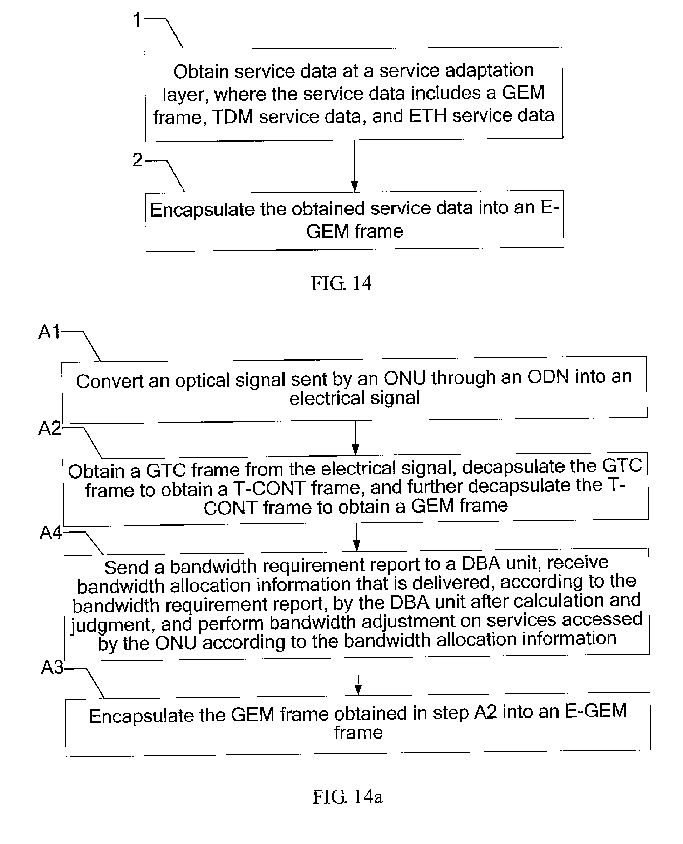

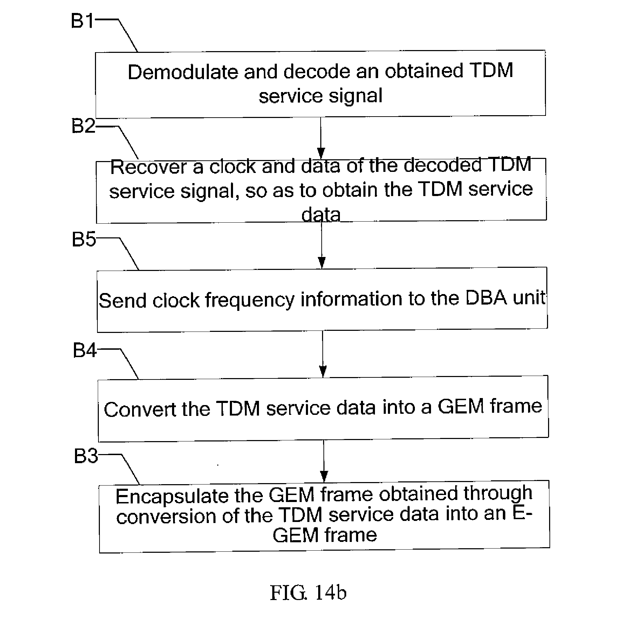

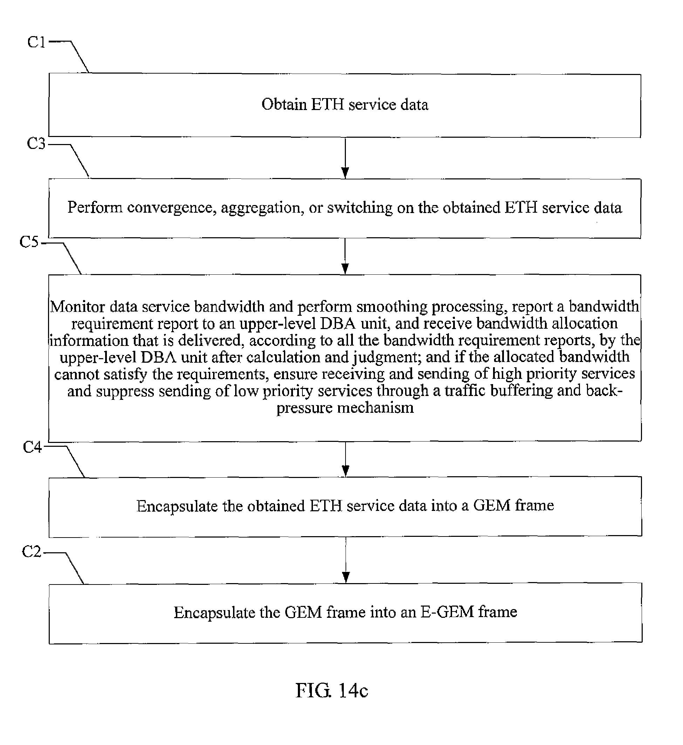

This embodiment provides a service adaptation method. As shown in FIG. 14, the method includes:
Step 1: obtaining service data, where the service data includes a GEM frame, and/or TDM service data, and/or ETH service data. The TDM service data may also be service data with fixed rate and continuous code streams such as SDH, SONET, or ATM service data; and
Step 2: encapsulating the obtained service data into an E-GEM frame, where the E-GEM frame at least includes a Payload Length Identifier (PLI) and a destination identifier of the service. For the structure of the E-GEM frame, reference may be made to the preceding embodiments, which is not repeated here.

After encapsulating the obtained service data into the E-GEM frame, the method may further include: encapsulating the E-GEM frame of the service data into a T-CONT frame for monitoring, scheduling, transmission, and management.

Definitely, the method may further include: decapsulating the T-CONT frame to obtain an E-GEM frame in a dropping direction of the service, decapsulating the E-GEM frame in the dropping direction of the service, to obtain corresponding service data, and sending the service data obtained through decapsulation to a corresponding terminal.

Through the description of the method, the method may encapsulate one or more services into E-GEM frames in a unified form in a service adaptation layer, which is convenient for combining E-GEM frames encapsulated with the same type of services into the same type of T-CONT frames at a path layer, and may conveniently implement QoS requirements of different services according to the priority of the T-CONT type.

It should be noted that, for different service data, the method for obtaining the service data in Step 1 in the method is different, and hereinafter, steps 1 and 2 are described in detail in combination of different services.

When the service adaptation method is applied to the access of GEM data in a GPON system, referring to FIG. 14a, Step 1 further includes:
Step A1: An optical signal sent by an ONU through an ODN is converted into an electrical signal.
Step A2: A GTC frame is obtained from the electrical signal, the GTC frame is decapsulated to obtain a T-CONT frame of the GPON system, and the T-CONT frame is further decapsulated to obtain a GEM frame. For the details, reference may be made to the preceding embodiments, which are not repeated here.
   Through steps A1 and A2, the service adaptation device can obtain the service data, that is, the GEM frame.
Step A3: The GEM frame obtained in Step A2 is encapsulated into an E-GEM frame.
   Preferably, a bandwidth requirement report of each service port of a remote ONU carried by the T-CONT frame in the GPON system in the service adaptation device is collected, and provided to a DBA unit; bandwidth allocation information is delivered by the DBA unit after calculation and judgment according to the bandwidth requirement report; and after the bandwidth allocation information is received, bandwidth adjustment is performed on services accessed by the ONU according to the bandwidth allocation information, that is, after step A2 and before step A3, the method may further include:
Step A4, a bandwidth requirement report is sent to a DBA unit (for example, a DBA1 unit), bandwidth allocation information that is delivered, according to the bandwidth requirement report, by the DBA unit after calculation and judgment is received, and bandwidth adjustment is performed on the services accessed by the ONU according to the bandwidth allocation information; definitely, if a bandwidth requirement sum of services in each ONU exceeds a permissible bandwidth range of the DBA1 unit, a bandwidth requirement report is sent to an upper-level DBA unit (for example, a DBA1.5 unit), bandwidth allocation information that is delivered, according to the bandwidth requirement report, by the upper-level DBA unit is received, and bandwidth adjustment is performed on the services accessed by the ONU according to the bandwidth allocation information; and if the bandwidth allocated by the upper-level DBA unit still cannot satisfy the bandwidth requirement sum of the services in each ONU, the receiving and sending of high priority services is ensured, and sending of low priority services is suppressed, that is, the high priority services preempt the low priority services. For the details, reference may be made to the preceding embodiments, which are not repeated here.

By adding step A4, the service adaptation device can monitor bandwidth utilization of the current service data, which is convenient for the device to dynamically adjust the bandwidth occupied by the service data, so as to satisfy QoS requirements of various services.

For TDM service data, referring to FIG. 14b, a service adaptation method provided in this embodiment may specifically include:
Step B1: An obtained TDM service signal is demodulated and decoded.
Step B2: A clock and data of the decoded TDM service signal is recovered, so as to obtain TDM service data.
   Through steps B1 to B2, the TDM service data is finally obtained. It should be further understood that, the TDM service data has fixed rate and continuous code streams.
Step B3: The TDM service data is encapsulated into an E-GEM frame.
   Through the description of steps B1 to B3, the method may encapsulate the TDM service data into an E-GEM frame, so as to satisfy the high requirements for delay of the TDM service, and implement the access to clock-sensitive services.
   Preferably, after step B2, the method may further include:
Step B4: The TDM service data is converted into a GEM frame.
   Therefore, step B3 specifically includes: encapsulating the GEM frame obtained through conversion in step B4 into an E-GEM frame; and afterward, the E-GEM frame may further be encapsulated into a T-CONT frame for monitoring, scheduling, and management.
   By adding step B4, the existing technology for adapting the TDM service to a GEM frame in the GPON system is utilized. The further encapsulation of the GEM frame into an E-GEM frame is irrelevant to a specific service type, which may form a uniform processing module. For the specific implementation, reference may be made to the relevant description in Embodiment 2.
   Preferably, after step B2 and before step B3, the method may further include:
Step B5: Clock frequency information is sent to the DBA unit, for example, the DBA1.5 unit.

By adding step B5, the DBA unit in the network can obtain information about the occupied bandwidth of the TDM service data, which is convenient for the DBA unit in the network to configure the TDM service bandwidth, so as to satisfy QoS requirements of the TMD service.

In addition, after step B2, the method may further include: monitoring service bandwidth and performing smoothing processing, reporting a bandwidth requirement report to an upper-level DBA unit, for example, the DBA1.5 unit, and obtaining bandwidth allocation information that is delivered, according to the reported bandwidth requirement report, by the upper-level DBA unit. For the TDM service with fixed rate and continuous code streams, the occupied bandwidth is the rate. For the details, reference may be made to the preceding embodiments, which are not repeated here.

For an ETH service, referring to FIG. 14c, a service adaptation method provided in this embodiment may specifically include:
Step C1: ETH service data is obtained.
Step C2: The ETH service data is encapsulated into an E-GEM frame.
   Preferably, after step C1 and before step C2, the method may further include:
Step C3: Convergence, aggregation, or switching is performed on the obtained ETH service data.
Step C4: The obtained ETH service data is encapsulated into a GEM frame.
Therefore, step C2 specifically includes: encapsulating the GEM frame into an E-GEM frame.
   By adding step C3, the bandwidth utilization is improved, and the bandwidth after the local switching and convergence is processed subsequently, so as to reduce the fluctuation of bandwidth between other nodes in the network. By adding step C4, the existing technology for adapting the ETH service data to a GEM frame in the GPON system is utilized. The further encapsulation of the GEM frame into an E-GEM frame is irrelevant to a specific service type, which may form a uniform processing module. For the specific implementation, reference may be made to the relevant description in Embodiment 2.
   Through the description of steps C1 to C4, the method may encapsulate the ETH service into an E-GEM frame. Compared with the implementation of bearing data service in an SDH system, the method has higher flexibility and efficiency, and is implemented simply.
   Furthermore, after step C3 and before step C4, the method may further include step C5.
Step C5: Data service bandwidth is monitored and smoothing processing is performed, a bandwidth requirement report is reported to an upper-level DBA unit, for example, a DBA1.5 unit, and bandwidth allocation information that is delivered, according to all bandwidth requirement reports, by the upper-level DBA unit after calculation and judgment is received. If the allocated bandwidth cannot satisfy the requirements, receiving and sending of high priority services are ensured, and sending of low priority services is suppressed through a traffic buffering and back-pressure mechanism, that is, the high priority services preempt the low priority services. For the details, reference may be made to the preceding embodiments, which are not repeated here.

It should be noted that, in this embodiment of the present invention, obtaining the GEM frame, the TDM service data, or the ETH service data is taken as an example for description, where the obtaining the service data may further include obtaining SDH service data/SONET service data/ATM service data; accordingly, the encapsulating the obtained service data into an E-GEM frame may further include encapsulating the obtained SDH service data/SONET service data/ATM service data into an E-GEM frame; the specific implementation is similar to that in this embodiment of the present invention, and is not repeated here; and the specific implementation equipment may be any one piece of or combination of equipment for implementing the solutions of the GEM frame, the TDM service data, and the ETH service data.

Persons of ordinary skill in the art may understand that all or part of the steps in the method of the embodiments may be accomplished through a program instructing related hardware. The program may be stored in a computer readable storage medium, and the storage medium may include a Read Only Memory (ROM), a Random Access Memory (RAM), a magnetic disk, or an optical disk.

A service adaptation device and a service adaptation method provided in the embodiments of the present invention are described in detail in the preceding. In this specification, the principle and implementation method of the present invention are illustrated through specific examples. The description of the embodiments is merely used for facilitate the understanding of the method and core ideas of the present invention. Meanwhile, persons of ordinary skill in the art can make modifications and variations to the specific implementation method and application scope according to the ideas of the present invention. In sum, the specification shall not be construed as a limit to the present invention.

## Claims

1. A service adaptation device, comprising:
a service access unit, configured to obtain service data, wherein the service data comprises a Gigabit-Passive Optical Network (GPON) Encapsulation Method (GEM) frame, and/or Time Division Multiplex (TDM) service data, and/or Ethernet (ETH) service data; and
an Enhanced GPON Encapsulation Method (E-GEM) adaptation unit, configured to encapsulate the service data obtained by the service access unit into an E-GEM frame.

2. The service adaptation device according to claim 1, wherein the device further comprises:
a Transmission Container (T-CONT) framer unit, configured to encapsulate the E-GEM frame of the service data into a T-CONT frame for monitoring, scheduling, transmission, and management.

3. The service adaptation device according to claim 2, wherein the device further comprises a T-CONT deframer unit and an E-GEM deadaptation unit, wherein
the T-CONT deframer unit is configured to decapsulate a T-CONT frame to obtain an E-GEM frame in a dropping direction of the service;
the E-GEM deadaptation unit is configured to decapsulate the E-GEM frame obtained through decapsulation of the T-CONT deframer unit into corresponding service data; and
the service access unit is further configured to send the corresponding service data obtained through decapsulation of the E-GEM deadaptation unit to a corresponding terminal.

4. The service adaptation device according to any one of claims 1 to 3, wherein the service access unit comprises an optical module and a GPON-Media Access Control (G-MAC) unit;
the optical module is configured to convert an optical signal sent by an Optical Network Unit (ONU) through an Optical Distribution Network (ODN) into an electrical signal;
the G-MAC unit is configured to decapsulate a GPON Transmission Convergence (GTC) frame in the electrical signal converted by the optical module into a T-CONT frame, and then decapsulate the T-CONT frame to obtain a GEM frame; and
the E-GEM adaptation unit is specifically configured to encapsulate the GEM frame obtained by the G-MAC unit into the E-GEM frame.

5. The service adaptation device according to claim 4, wherein the service access unit further comprises:
a first level-1 Dynamic Bandwidth Allocation (DBA) unit, configured to collect a bandwidth requirement report of services in each ONU, and allocate bandwidth for the services in each ONU according to the bandwidth requirement report; if a bandwidth requirement sum of the services in each ONU exceeds a permissible bandwidth range, send the bandwidth requirement report to an upper-level DBA unit, receive bandwidth allocation information that is delivered, according to the bandwidth requirement report, by the upper-level DBA unit, and perform bandwidth adjustment on services accessed by the ONU according to the bandwidth allocation information; and if the bandwidth allocated to the first level 1 DBA unit by the upper-level DBA unit still fails to satisfy the bandwidth requirement sum of the services in each ONU, ensure receiving and sending of high priority services and suppress sending of low priority services.

6. The service adaptation device according to any one of claims 1 to 3, wherein the service access unit comprises:
a Line Interface Unit (LIU), configured to demodulate and decode an obtained TDM service signal; and
a Clock and Data Recovery (CDR) unit, configured to recover a clock and data of the TDM service signal decoded by the LIU, so as to obtain TDM service data.

7. The service adaptation device according to claim 6, wherein the service access unit further comprises a first Traffic Management (TM) unit and a framer unit;
the first TM unit is configured to convert the TDM service data into a GEM frame;
the E-GEM adaptation unit is specifically configured to encapsulate the GEM frame converted by the first TM unit into an E-GEM frame; and
the framer unit is configured to monitor and manage the TDM service data.

8. The service adaptation device according to claim 7, wherein
the first TM unit is further configured to monitor service bandwidth and perform smoothing processing, report a bandwidth requirement report to an upper-level DBA unit, and obtain bandwidth allocation information that is delivered, according to the reported bandwidth requirement report, by the upper-level DBA unit.

9. The service adaptation device according to claim 8, wherein the CDR unit is further configured to send clock frequency information to the upper-level DBA unit.

10. The service adaptation device according to any one of claims 1 to 3, wherein the service access unit comprises a Physical Layer (PHY) processing unit;
the PHY processing unit is configured to obtain ETH service data; and
the E-GEM adaptation unit is specifically configured to encapsulate the ETH service data obtained by the PHY processing unit into an E-GEM frame.

11. The service adaptation device according to claim 10, wherein the service access unit further comprises a Layer 2 Switch (L2S) unit and a second TM unit;
the L2S unit is configured to perform convergence, aggregation, or switching on the obtained ETH service data;
the second TM unit is configured to convert the obtained ETH service data into a GEM frame; and
the E-GEM adaptation unit is specifically configured to encapsulate the GEM frame converted by the second TM unit into an E-GEM frame.

12. The service adaptation device according to claim 11, wherein the second TM unit further comprises a bandwidth monitoring and smoothing unit and a back-pressure control unit;
the bandwidth monitoring and smoothing unit is configured to monitor data service bandwidth and perform smoothing processing, and report a bandwidth requirement report to an upper-level DBA unit; and
the back-pressure control unit is configured to receive bandwidth allocation information that is delivered, according to the bandwidth requirement report reported by the bandwidth monitoring and smoothing unit, by the upper-level DBA unit, and when it is determined that allocated bandwidth fails to satisfy the requirement, ensure receiving and sending of high priority services and suppress sending of low priority services through a traffic buffering and back-pressure mechanism.

13. A service adaptation method, comprising:
obtaining service data, wherein the service data comprises a Gigabit-Passive Optical Network (GPON) Encapsulation Method (GEM) frame, and/or Time Division Multiplex (TDM) service data, and/or Ethernet (ETH) service data; and
encapsulating the obtained service data into an Enhanced GPON Encapsulation Method (E-GEM) frame.

14. The method according to claim 13, wherein after the encapsulating the obtained service data into the E-GEM frame, the method further comprises:
encapsulating the E-GEM frame of the service data into a Transmission Container (T-CONT) frame for monitoring, scheduling, transmission, and management.

15. The method according to claim 13, further comprising:
decapsulating a T-CONT frame to obtain an E-GEM frame in a dropping direction of the service;
decapsulating the E-GEM frame in the dropping direction of the service into corresponding service data; and
sending the corresponding service data obtained through decapsulation to a corresponding terminal.

16. The method according to any one of claims 13 to 15, wherein
the obtaining the service data comprises: converting an optical signal sent by an Optical Network Unit (ONU) through an Optical Distribution Network (ODN) into an electrical signal; and decapsulating a GPON Transmission Convergence (GTC) frame in the electrical signal into a T-CONT frame, and then decapsulating the T-CONT frame to obtain a GEM frame; and
the encapsulating the obtained service data into the E-GEM frame comprises: encapsulating the GEM frame into the E-GEM frame.

17. The method according to claim 16, wherein after the decapsulating the T-CONT frame to obtain the GEM frame, the method further comprises:
collecting a bandwidth requirement report of services in each ONU, and allocating bandwidth for the services in each ONU according to the bandwidth requirement report; if a bandwidth requirement sum of the services in each ONU exceeds a permissible bandwidth range, sending a bandwidth requirement report to an upper-level Dynamic Bandwidth Allocation (DBA) unit, receiving bandwidth allocation information that is delivered, according to the bandwidth requirement report, by the upper-level DBA unit, and performing bandwidth adjustment on services accessed by the ONU according to the bandwidth allocation information; and if the bandwidth allocated by the upper-level DBA unit still fails to satisfy the bandwidth requirement sum of the services in each ONU, ensuring receiving and sending of high priority services and suppressing sending of low priority services.

18. The method according to any one of claims 13 to 15, wherein
the obtaining the service data comprises: demodulating and decoding an obtained TDM service signal, and recovering a clock and data of the decoded TDM service signal, so as to obtain TDM service data; and
the encapsulating the obtained service data into the E-GEM frame comprises: encapsulating the TDM service data into the E-GEM frame.

19. The method according to claim 18, wherein after the recovering the clock and the data of the decoded TDM service signal, so as to obtain the TDM service data, the method further comprises:
converting the TDM service data into a GEM frame; and
the encapsulating the obtained service data into the E-GEM frame comprises: encapsulating the GEM frame into the E-GEM frame.

20. The method according to claim 19, wherein after the obtaining the TDM service data, the method further comprises:
monitoring service bandwidth and performing smoothing processing, reporting a bandwidth requirement report to an upper-level DBA unit, and obtaining bandwidth allocation information that is delivered, according to the reported bandwidth requirement report, by the upper-level DBA unit.

21. The method according to claim 20, wherein after the recovering the clock and the data of the decoded TDM service signal, the method further comprises:
sending clock frequency information to the upper-level DBA unit.

22. The method according to any one of claims 13 to 15, wherein
the obtaining the service data comprises: obtaining ETH service data; and
the encapsulating the obtained service data into the E-GEM frame comprises: encapsulating the ETH service data into the E-GEM frame.

23. The method according to claim 22, wherein after the obtaining the ETH service data, the method further comprises:
performing convergence, aggregation, or switching on the obtained ETH service data, and converting the obtained ETH service data into a GEM frame; and
the encapsulating the obtained service data into the E-GEM frame comprises: encapsulating the GEM frame into an E-GEM frame.

24. The method according to claim 23, wherein after the performing convergence, aggregation, or switching on the obtained ETH service data, the method further comprises:
monitoring data service bandwidth and performing smoothing processing, reporting an average bandwidth requirement report to an upper-level DBA unit, receiving bandwidth allocation information that is delivered, according to the bandwidth requirement report, by the upper-level DBA unit, and if the allocated bandwidth fails to satisfy the requirement, ensuring receiving and sending of high priority services and suppressing sending of low priority services through a traffic buffering and back-pressure mechanism.
